# FASCICULE DE BREVET EUROPEEN

(11) **EP 2 865 353 B1**
(45) Date de publication et mention de la délivrance du brevet: **27.06.2018**
(21) Numéro de dépôt: 14189176.2
(22) Date de dépôt: 16.10.2014
(51) Int. Cl.: A61C 8/00, A61C 13/265

(54) **Ensemble prothétique dentaire comprenant un implant dentaire et une prothèse dentaire trans-fixée**
Zahnprothesenanordnung, die ein Zahnimplantat und eine feste Zahnprothese umfasst
Dental prosthetic assembly comprising a dental implant and a transfixed dental prosthesis

(30) Priorité: 25.10.2013 FR 1360411
(43) Date de publication de la demande: 29.04.2015
(73) Titulaire: ANTHOGYR, 74700 Sallanches (FR)
(72) Inventeur: Richard, Hervé, 73590 Notre Dame de Bellecombe (FR)
(74) Mandataire: Cabinet Poncet

(56) Documents cités:
- EP-A1- 0 867 154
- EP-A1- 1 972 297
- EP-A1- 1 992 304
- KR-B1- 101 311 250

## Description

La présente invention concerne le domaine de l'implantologie dentaire, et notamment le traitement de l'édentement d'arcades dentaires avec un ensemble prothétique dentaire comportant une prothèse (éventuellement plurale) implanto-portée de type trans-fixée sur au moins un implant dentaire.

Une prothèse implanto-portée de type trans-fixée est destinée à reposer sur l'arcade dentaire du patient, en étant fixée à un ou plusieurs implants dentaires fixés dans l'os de la mâchoire du patient, pour former une ou plusieurs dents prothétiques. Afin de permettre le retrait éventuel ultérieur de la prothèse, par exemple pour réparation, la fixation de la prothèse aux implants est effectuée par l'intermédiaire de moyens de fixation (des vis dans l'état de la technique antérieur) traversant la prothèse, d'où l'expression de « prothèse trans-fixée ». La tête des vis est accessible depuis la face active de la prothèse (ou face de mastication).

Pour des raisons de résistance mécanique de la tenue de l'implant dans l'os de la mâchoire notamment, les implants sont orientés selon des directions axiales qui sont obliques entre elles et/ou obliques par rapport à la surface générale de l'arcade dentaire.

Il est connu de fixer la prothèse implanto-portée aux implants par le biais de vis de trans-fixation. Du fait des orientations relatives obliques des implants entre eux, on a souvent recours à des piliers angulés. Un pilier angulé est une pièce intermédiaire, destinée à être rapportée sur l'implant selon une première direction axiale (correspondant à la direction longitudinale de l'implant), présentant une cavité filetée intérieurement et orientée selon une deuxième direction axiale faisant un angle avec la première direction axiale. La cavité filetée intérieurement reçoit la vis de trans-fixation selon la deuxième direction axiale.

Pour amener et visser une vis de trans-fixation dans un pilier angulé, on prévoit dans la prothèse un canal d'accès pour un outil d'entraînement en rotation. Le canal d'accès est orienté selon une troisième direction axiale. L'orientation de ce canal d'accès doit être choisie avec soin en évitant que celui-ci ne débouche au sommet d'une dent prothétique en surface extérieure active de la prothèse, afin de ne pas affecter la résistance de la dent prothétique dans une zone devant supporter les contraintes de mastication. Pour gérer au mieux ces nécessités, le praticien chirurgien dentiste a à sa disposition de nombreux piliers intermédiaires d'encombrements et d'angles différents. Une orientation optimale entre les première, deuxième et troisième directions axiales n'est toutefois pas toujours possible malgré la disponibilité de nombreux piliers intermédiaires différents.

Il est donc souhaitable de proposer une solution de fixation amovible qui permette une orientation optimale du canal d'accès, en tenant compte de l'orientation de l'implant, et ce sans avoir recours à de trop nombreuses pièces à manipuler et à garder en stock pour le praticien.

Pour atteindre ce but, la demanderesse a envisagé de rendre captives les vis de trans-fixation (par sertissage par exemple) de la prothèse, les vis de trans-fixation étant alors destinées à se visser directement dans les implants.

Mais, pour qu'une prothèse trans-fixée soit installée correctement en bouche, et pour que le praticien puisse contrôler sa bonne adaptabilité avant fixation, plus particulièrement dans le cas d'une prothèse plurale implanto-portée, il faut commencer par une étape de posage de la prothèse sur l'arcade dentaire du patient. Dans la solution de sertissage de vis captives envisagée par la demanderesse, cela nécessite que les vis puissent être reçues en quasi-totalité dans la prothèse. Mais la longueur nécessaire des vis rend ceci le plus souvent impossible. Et quand bien même cela serait possible, la tête de vis est alors inatteignable pour être manoeuvrée par un outil d'entraînement en rotation amené via le canal d'accès, du fait de l'inclinaison entre les première et troisième directions.

Le document EP 1 992 304 A1 ne décrit pas une prothèse dentaire trans-fixée. Il décrit une prothèse dentaire d'un autre type, montée par emmanchement conique sur un pilier. Le pilier n'est ainsi pas monté rotatif et retenu en translation dans la prothèse dentaire. Le pilier est lui-même reçu par emmanchement conique dans le logement borgne d'un implant vissé dans la mâchoire du patient. Pour s'opposer à une extraction axiale du pilier hors de l'implant, il est prévu sur le pilier des ailettes radiales qui, après une légère rotation, sont destinées à coopérer par complémentarité de forme avec des ailettes prévues à l'embouchure du logement borgne de l'implant. Les ailettes du pilier ne constituent pas un moyen de verrouillage de la prothèse sur l'implant : en effet, le pilier est fixé dans l'implant par ses ailettes et une légère rotation avant même que le pilier reçoive la prothèse dentaire par emmanchement conique.

Un problème proposé par la présente invention est de permettre une fixation optimale et amovible d'une prothèse implanto-portée de type trans-fixée, à l'aide de moyens de liaison aux implants qui présentent un moins grand nombre d'éléments constitutifs et qui autorisent un choix plus libre d'orientation du canal d'accès dans la prothèse.

Pour atteindre ces objets, ainsi que d'autres, l'invention propose un ensemble prothétique dentaire comprenant :
- un implant dentaire,
- une prothèse dentaire,
- un dispositif de liaison comportant une cavité de retenue ménagée dans l'un de l'implant dentaire ou de la prothèse dentaire, et munie sur sa périphérie d'excroissances saillantes s'étendant radialement vers le centre de la cavité de retenue ;
selon l'invention :
- la prothèse dentaire est de type trans-fixée,
- le dispositif de liaison comprend un verrou comportant au moins deux ailettes radiales, monté rotatif et retenu en translation dans l'autre de l'implant dentaire ou de la prothèse dentaire, les ailettes radiales et les excroissances saillantes étant conformées et dimensionnées de façon à permettre une pénétration du verrou et de ses ailettes radiales dans la cavité de retenue par un simple mouvement de translation axiale,
- les ailettes radiales et les excroissances saillantes sont conformées et dimensionnées de façon à coopérer par rotation du verrou pour retenir la prothèse dentaire trans-fixée sur l'implant dentaire.

Le verrou monté dans la prothèse dentaire ou dans l'implant dentaire par l'intermédiaire d'une liaison pivot (ou pivot glissant) est directement orienté selon une direction destinée à être coaxiale avec la direction axiale de l'implant, ce qui évite d'avoir recours à des piliers angulés.

Le dispositif de liaison selon l'invention peut présenter un encombrement axial très limité, dès lors que des ailettes peuvent occuper une faible dimension dans la direction axiale du verrou. De plus, son engagement par simple mouvement de translation axiale et la conformation des ailettes radiales et excroissances saillantes facilitent la phase de posage de la prothèse sur l'arcade dentaire. Pour être retenu dans la cavité de retenue, le verrou n'a besoin d'être entraîné en rotation que selon moins d'un tour complet. La manoeuvre du verrou est ainsi rapide et facile. La course axiale nécessaire pour manoeuvrer le verrou et l'amener à être retenu dans la cavité de retenue est ainsi très réduite.

De préférence, on peut prévoir que :
- les ailettes radiales du verrou sont séparées entre elles par des secteurs angulaires dimensionnés de façon à laisser passer une excroissance saillante par un simple mouvement de translation axiale,
- les excroissances saillantes de la cavité de retenue sont séparées entre elles par des secteurs angulaires dimensionnés de façon à laisser passer une ailette radiale lors dudit simple mouvement de translation axiale.

Avantageusement, les ailettes radiales du verrou peuvent être portées par un premier tronçon d'extrémité sensiblement conique ou tronconique. Le premier tronçon d'extrémité sensiblement conique ou tronconique permet un guidage progressif du verrou pour le centrer par rapport à la cavité de retenue. L'expression « tronçon d'extrémité sensiblement tronconique » est entendue comme désignant toute forme géométrique s'affinant progressivement, pouvant être une extrémité arrondie par exemple.

De préférence, le verrou peut comporter une empreinte permettant son entraînement en rotation à l'aide d'un outil. Cette empreinte peut être située à une extrémité du verrou opposée à l'extrémité portant les ailettes radiales.

Avantageusement, les ailettes radiales peuvent comporter une facette d'appui à rampe progressive destinée à venir porter contre une excroissance saillante de la cavité de retenue, et/ou les excroissances saillantes peuvent comporter une facette de retenue à rampe progressive destinée à venir porter contre une ailette radiale du verrou.

La ou les rampes des facettes d'appui et/ou de retenue permettent un guidage radial et un entraînement en translation de la prothèse par rapport à l'implant lors de la manoeuvre en rotation du verrou, et assurent un excellent plaquage de la prothèse sur l'implant.

Dans un premier mode de réalisation selon l'invention, le verrou peut être monté rotatif et retenu en translation dans la prothèse dentaire par l'intermédiaire d'une bague de retenue compressible, de préférence au moyen d'une fente, venant simultanément en prise dans une gorge périphérique extérieure ménagée sur le verrou et dans une gorge périphérique intérieure ménagée dans la prothèse dentaire.

Le verrou est ainsi disposé en liaison pivot (ou pivot glissant) dans la prothèse et est maintenu captif dans la prothèse de façon simple et efficace.

Pour assurer la liaison entre la prothèse et l'implant, le praticien introduit un outil d'entraînement en rotation dans le canal d'accès ménagé dans la prothèse jusqu'à engager l'outil sur le verrou pour le pousser dans la cavité de retenue de l'implant puis pour l'entraîner en rotation.

Pour permettre toutefois un démontage du verrou si celui-ci venait à être accidentellement détérioré, la prothèse dentaire peut avantageusement comporter une pluralité de canaux axiaux débouchants s'étendant jusqu'à la gorge périphérique intérieure ménagée dans la prothèse dentaire.

On peut ainsi introduire un outil de retrait de verrou, comportant une pluralité de tiges adaptées pour pénétrer dans les canaux axiaux jusqu'à venir porter en appui contre la bague de retenue compressible pour la presser radialement de façon centripète afin d'en diminuer les dimensions radiales, puis extraire la bague de retenue hors de la prothèse dentaire et ainsi libérer le verrou.

De préférence, la gorge périphérique intérieure ménagée dans la prothèse dentaire, et/ou la gorge périphérique extérieure ménagée sur le verrou, présentent une hauteur légèrement supérieure à celle de la bague de retenue, permettant un jeu axial en translation entre la prothèse dentaire et le verrou.

Les jeux axiaux en translation induits par la différence de hauteurs entre d'une part la bague de retenue et d'autre part la gorge périphérique intérieure ménagée dans la prothèse et/ou la gorge périphérique extérieure ménagée sur le verrou, permettent un montage aisé de la bague, donc du verrou, dans la prothèse. Cela permet également au verrou de reculer un peu dans la prothèse pour y être partiellement ou totalement reçu dans le cas où les ailettes radiales du verrou ne sont pas strictement alignées avec les espaces entre les excroissances saillantes de la cavité de retenue lors du posage de la prothèse sur l'arcade dentaire. Autrement dit, le verrou est disposé en liaison pivot glissant dans la prothèse, avec une course de glissement déterminée par le jeu axial en translation entre la prothèse dentaire et le verrou.

Dans un deuxième mode de réalisation selon l'invention, le verrou peut être monté rotatif et retenu en translation dans l'implant dentaire par l'intermédiaire :
- d'une gorge périphérique intérieure située dans une cavité de réception ménagée dans l'implant dentaire,
- d'une deuxième extrémité de verrou comportant des moyens d'encliquetage destinés à pénétrer dans la gorge périphérique intérieure de la cavité de réception.

Pour assurer la liaison entre la prothèse et l'implant, le praticien engage la prothèse sur l'implant et le verrou pour que le premier tronçon d'extrémité du verrou pénètre dans la cavité de retenue de la prothèse, puis il introduit un outil d'entraînement en rotation dans le canal d'accès ménagé dans la prothèse, et traverse la prothèse en passant à travers la cavité de retenue ménagée dans la prothèse pour parvenir jusqu'au verrou, disposé sur l'implant, et l'entraîner en rotation.

Tous les modes de réalisation permettent de limiter le stock de composants chez les praticiens, simplifient la procédure chirurgicale, limitent l'encombrement des éléments constitutifs de la liaison entre la prothèse et le ou les implants, et rendent plus flexible le choix de l'orientation des canaux d'accès prévus dans la prothèse.

Le deuxième mode de réalisation présente en outre l'avantage que la majeure partie de l'encombrement du dispositif de liaison se trouve du côté de l'implant, l'empreinte située sur la prothèse présentant un encombrement extrêmement réduit. Le prothésiste est donc encore moins contraint, lors de la fabrication de la prothèse, pour orienter les canaux d'accès.

D'autres objets, caractéristiques et avantages de la présente invention ressortiront de la description suivante de modes de réalisation particuliers, faite en relation avec les figures jointes, parmi lesquelles :
- la figure 1 est une vue en perspective d'une partie d'une prothèse dentaire trans-fixée sur des implants dentaires par des dispositifs de liaison, représentative d'un premier mode de réalisation d'un ensemble prothétique dentaire selon l'invention ;
- la figure 2 est une vue en perspective d'un verrou utilisé dans un dispositif de liaison du premier mode de réalisation d'ensemble prothétique dentaire selon l'invention ;
- la figure 3 est une vue de dessous du verrou de la figure 2 ;
- la figure 4 est une vue en perspective d'une bague de retenue compressible destinée à être utilisée avec un verrou tel que représenté sur les figures 2 et 3 ;
- la figure 5 est une vue en coupe de la prothèse dentaire illustrée sur la figure 1 ;
- la figure 6 est une vue de dessus d'un implant sur lequel est destinée à être rapportée la prothèse dentaire illustrée sur la figure 5 ;
- la figure 7 est une vue en perspective de l'implant de la figure 6 ;
- la figure 8 est une vue en coupe illustrant la coopération de la prothèse dentaire illustrée sur la figure 5 avec l'implant illustré sur les figures 6 et 7 ;
- la figure 9 est une vue en perspective d'un verrou utilisé dans un ensemble prothétique dentaire selon un deuxième mode de réalisation de l'invention ;
- la figure 10 est une vue en perspective d'un implant destiné à recevoir, à son extrémité supérieure, le verrou illustré sur la figure 9 ;
- la figure 11 est une vue en coupe de l'implant de la figure 10 muni d'un verrou tel qu'illustré sur la figure 9 ;
- la figure 12 est une vue en coupe d'une prothèse dentaire destinée à être retenue sur l'implant de la figure 11 ;
- la figure 13 est une vue en perspective d'une cavité de retenue prévue dans la prothèse dentaire illustrée sur la figure 12 ;
- la figure 14 est une vue en coupe illustrant la coopération de la prothèse dentaire illustrée sur la figure 12 avec l'implant illustré sur la figure 11 ; et
- la figure 15 est une vue en perspective d'une pièce de verrouillage.

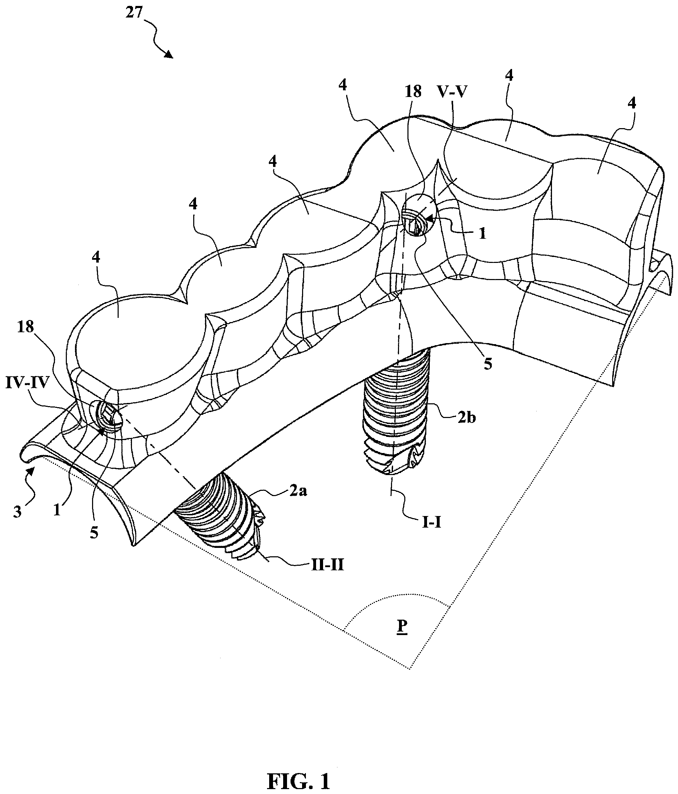

Les figures 1 à 8 illustrent un premier mode de réalisation d'ensemble prothétique dentaire 27 selon l'invention, comprenant des implants dentaires 2a et 2b, et une prothèse dentaire 3 trans-fixée. La prothèse dentaire 3 est ici une prothèse plurale (c'est-à-dire permettant la reconstitution de plusieurs dents 4) implanto-portée sur une pluralité d'implants dentaires 2a et 2b. Pour plus de clarté, seule la moitié de la prothèse dentaire 3 a été représentée, l'autre moitié étant sensiblement symétrique de celle représentée sur la figure 1. La prothèse dentaire 3 présente ainsi une forme générale en arc et est destinée à reposer sur quatre implants dentaires (deux par moitié de prothèse dentaire 3). Il est néanmoins possible de recourir à plus ou moins d'implants dentaires.

Comme illustré sur la figure 1, la prothèse dentaire 3 est destinée à reposer sur une surface P sensiblement plane correspondant à la surface générale de l'arcade dentaire du patient.

L'implant dentaire plus spécifiquement désigné par la référence 2a présente une direction d'allongement II-II déterminant sa direction axiale de vissage dans la mâchoire du patient. L'implant dentaire 2a est vissé sur la partie antérieure de la mâchoire du patient.

De façon similaire, l'implant dentaire plus spécifiquement désigné par la référence 2b présente une direction d'allongement I-I définissant sa direction de vissage dans la partie postérieure de la mâchoire du patient.

On observe, dans l'exemple illustré sur la figure 1, que la direction axiale I-I est sensiblement perpendiculaire à la surface P sensiblement plane tandis que la direction axiale II-II est oblique par rapport à la surface P sensiblement plane. L'implantation oblique de l'implant dentaire 2a dans la mâchoire du patient permet à celui-ci d'être en prise dans une zone d'os présentant une meilleure solidité, à même de garantir une stabilité satisfaisante de la prothèse dentaire 3. Les implantations selon des directions I-I et II-II non parallèles augmentent la tenue de l'ensemble des implants pour supporter les contraintes appliquées à la prothèse dentaire 3 lors de son utilisation.

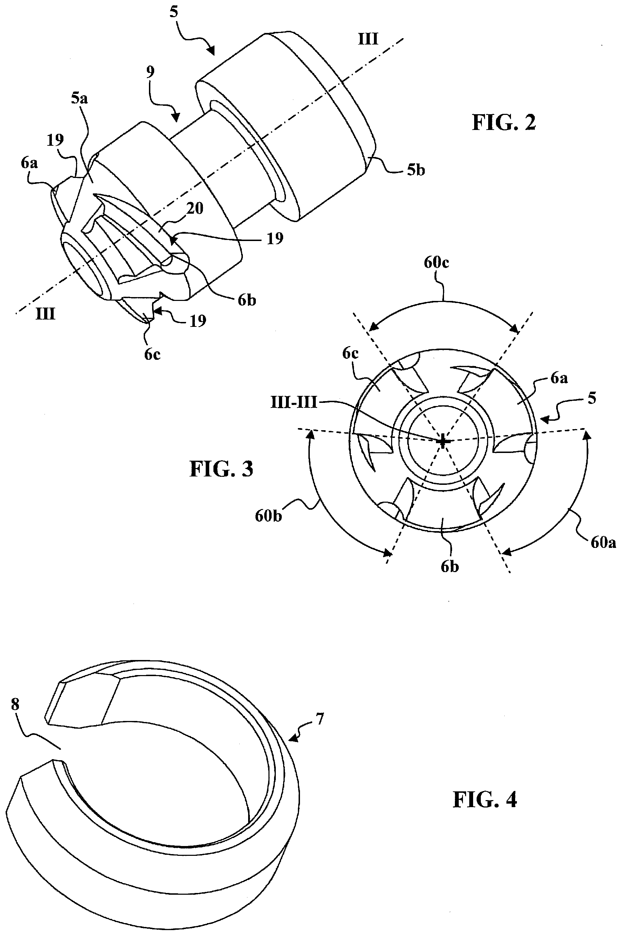

Pour fixer la prothèse dentaire 3 sur les implants dentaires 2a et 2b, on a recours à des dispositifs de liaison 1 comportant chacun un verrou 5 plus particulièrement illustré sur les figures 2 et 3. Sur ces figures, on constate que le verrou 5 comporte trois ailettes radiales 6a à 6c et s'étend longitudinalement selon une direction axiale III-III.

Chaque verrou 5 est monté dans la prothèse dentaire 3 au moyen d'une bague de retenue 7 compressible telle qu'illustrée sur la figure 4. La bague de retenue 7 est munie d'une fente 8 sensiblement radiale qui autorise son montage par clipsage sur le verrou 5. En l'espèce, la bague de retenue 7 est montée dans une gorge périphérique extérieure 9 ménagée sur le verrou 5.

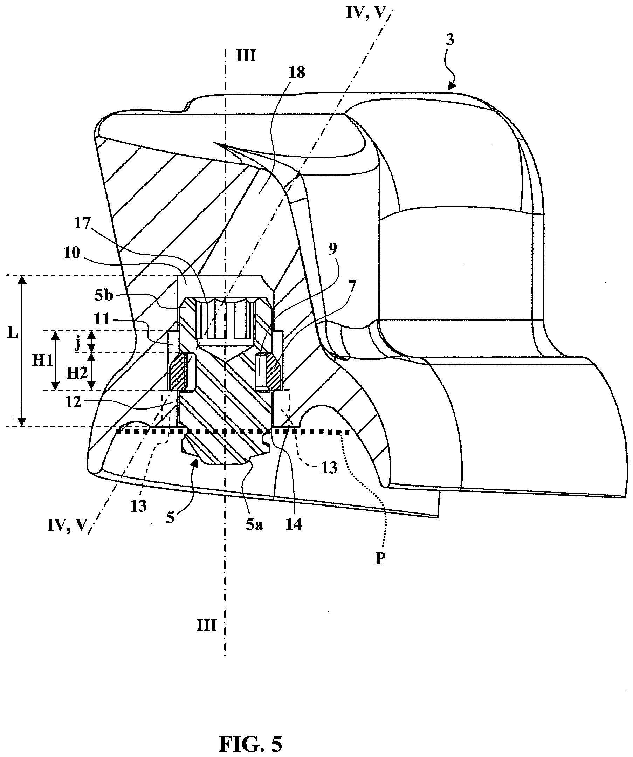

Comme illustré sur la figure 5, le verrou 5 est destiné à être monté rotatif et être retenu en translation dans la prothèse dentaire 3 dans un logement de réception 10. Le logement de réception 10 comporte une gorge périphérique intérieure 11.

Le logement de réception 10 présente, dans sa partie inférieure, un épaulement 12 annulaire de sorte que le logement de réception 10 présente en partie inférieure un orifice inférieur 14 de section transversale plus petite que le diamètre extérieur de la bague de retenue 7. Grâce à son caractère compressible, la bague de retenue 7 peut diminuer de diamètre extérieur pour pénétrer dans l'orifice inférieur 14 et passer l'épaulement 12 en enserrant de plus près le fond de la gorge périphérique extérieure 9. Une fois que le verrou 5 muni de sa bague de retenue 7 a été inséré axialement dans le logement de réception 10, la bague de retenue 7 s'épanouit radialement et vient simultanément en prise dans la gorge périphérique extérieure 9 et dans la gorge périphérique intérieure 11. Le verrou 5 est ainsi retenu captif dans la prothèse dentaire 3.

Dans le cas où le verrou 5 est endommagé, il peut être nécessaire de le retirer en dehors du logement de réception 10 sans endommager la prothèse dentaire 3.

Pour ce faire, il est prévu des canaux axiaux 13, illustrés en traits discontinus sur la figure 5, s'étendant depuis l'orifice inférieur 14 du logement de réception 10 jusqu'à la gorge périphérique intérieure 11. Un outil de retrait de la bague de retenue 7 peut ainsi être amené autour de la bague de retenue 7 afin de la compresser et d'en réduire le diamètre extérieur pour l'extraire via l'orifice inférieur 14.

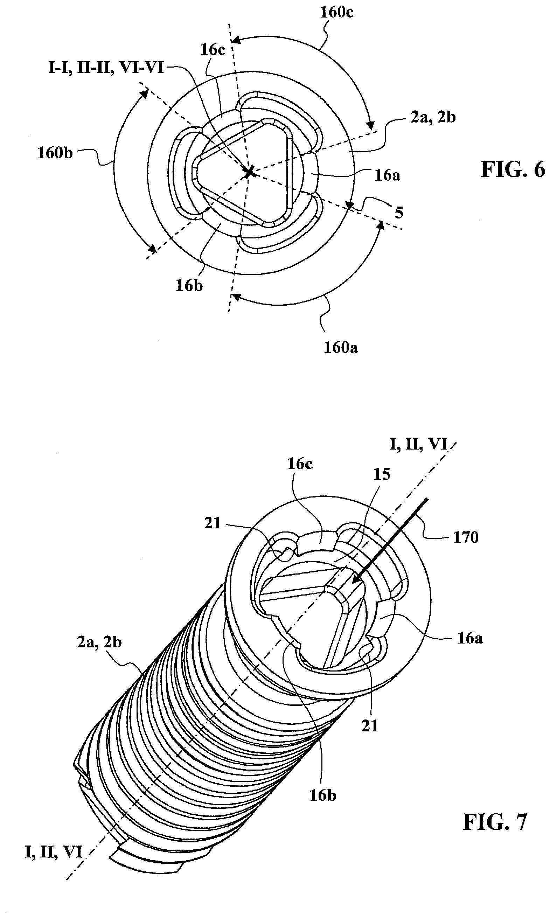

Le verrou 5 est destiné à coopérer directement avec un implant dentaire 2a ou 2b tel qu'illustré sur les figures 6 et 7. Sur ces figures, on voit que l'implant 2a ou 2b comporte une cavité de retenue 15 à trois excroissances saillantes 16a à 16c s'étendant radialement vers le centre de la cavité de retenue 15.

Les ailettes radiales 6a à 6c et les excroissances saillantes 16a à 16c sont conformées et dimensionnées de façon à coopérer par rotation du verrou 5 pour retenir la prothèse dentaire 3 trans-fixée sur l'implant dentaire 2. De plus, les ailettes radiales 6a à 6c et les excroissances saillantes 16a à 16c sont conformées dimensionnellement de façon à permettre une pénétration du verrou 5 et de ses ailettes radiales 6a à 6c dans la cavité de retenue 15 par un simple mouvement de translation axiale illustré par la flèche 170 sur la figure 7.

Pour ce faire, les ailettes radiales 6a à 6c du verrou 5 sont séparées entre elles par des secteurs angulaires 60a à 60c dimensionnés de façon à laisser passer une excroissance saillante 16a, 16b ou 16c lors du mouvement de translation axiale 170. De plus, les excroissances saillantes 16a à 16c de la cavité de retenue 15 sont séparées entre elles par des secteurs angulaires 160a à 160c dimensionnés de façon à laisser passer une ailette radiale 6a, 6b ou 6c lors du simple mouvement de translation axiale 170. Dans l'exemple illustré sur les figures 3 et 6, les secteurs angulaires 60a à 60c s'étendent angulairement selon 70°, les ailettes radiales 6a à 6c s'étendant angulairement selon 50°. De leur côté, les secteurs angulaires 160a à 160c s'étendent angulairement selon 80°, tandis que les excroissances saillantes 16a à 16c s'étendent angulairement selon 40°.

On voit plus particulièrement sur la figure 2 que les ailettes radiales 6a à 6c du verrou 5 sont ménagées sur un tronçon de première extrémité 5a sensiblement tronconique. Cette forme de tronçon de première extrémité 5a permet un centrage relatif entre le verrou 5 et la cavité de retenue 15.

On voit plus particulièrement sur la figure 5 que le verrou 5 comporte, à une deuxième extrémité 5b, une empreinte 17 permettant son entraînement en rotation selon la direction axiale III-III à l'aide d'un outil. En l'espèce, l'empreinte 17 est polygonale. L'empreinte 17 pourrait toutefois présenter toute forme de section transversale non circulaire adaptée.

L'empreinte 17 peut notamment être conçue selon les enseignements du document EP 2 607 722 A1 afin d'autoriser l'utilisation d'un outil d'entraînement en rotation permettant un effet de rotule.

En alternative ou en complément, l'outil en rotation peut être spécifiquement adapté pour entraîner en rotation le verrou 5 en accédant à l'empreinte 17 via le canal d'accès 18 qui s'étend selon une direction axiale IV-IV ou V-V oblique par rapport à la direction axiale III-III (figure 5) et oblique avec la surface générale d'appui P sensiblement plane de la prothèse dentaire 3.

On voit plus particulièrement sur la figure 2 que les ailettes radiales 6a à 6c comportent une facette d'appui 19 à rampe progressive 20 destinée à venir porter contre une excroissance saillante 16a, 16b ou 16c de la cavité de retenue 15. La rampe progressive 20 des ailettes radiales 6a à 6c permet d'assurer un bon guidage radial et un bon plaquage axial de la prothèse dentaire 3 contre l'implant 2.

En alternative ou en complément, les excroissances saillantes 16a à 16c peuvent comporter une facette de retenue 21 à rampe progressive destinée à venir porter contre une ailette radiale 6a à 6c du verrou 5.

Pour réaliser la prothèse dentaire 3 destinée à être fixée sur les implants dentaires 2a et 2b préalablement implantés dans la mâchoire du patient, le prothésiste utilise une empreinte prise par le dentiste et permettant de repérer les directions I-I et II-II selon lesquelles sont orientés les implants 2a et 2b. De la sorte, le prothésiste peut prévoir d'orienter les verrous 5 par rapport à la prothèse dentaire 3 de façon à faire coïncider les directions axiales d'allongement III-III des verrous 5 avec les directions axiales I-I et II-II, tout en plaçant les canaux d'accès 18 orientés selon les directions respectives IV-IV et V-V de façon à procurer un accès aux verrous 5 et à autoriser un entraînement en rotation des verrous 5 selon les directions axiales III-III au moyen d'un outil d'entraînement en rotation permettant un effet de rotule. L'effet de rotule permet une grande liberté de choix des angles entre les directions axiales I-I et V-V d'une part et II-II et IV-IV d'autre part. Le prothésiste peut ainsi placer les canaux d'accès 18 de façon qu'ils ne débouchent pas sur une zone de surface active de dent destinée à supporter des efforts de mastication importants.

Une fois la prothèse dentaire 3 fabriquée par le prothésiste, celle-ci est envoyée chez le dentiste pour être fixée en bouche du patient sur les implants dentaires 2a et 2b.

Pour ce faire, le dentiste commence par effectuer un posage de la prothèse dentaire 3 sur l'arcade dentaire du patient afin de vérifier la bonne adéquation de la prothèse dentaire 3 avec l'espace en bouche.

Lors de cette phase de posage, les verrous 5 se trouvent avec leur direction longitudinale III-III coaxiale aux directions axiales I-I et II-II.

Si les ailettes radiales 6a à 6c se trouvent en correspondance des secteurs angulaires 160a à 160c, le verrou 5 et ses ailettes radiales 6a à 6c pénètrent dans la cavité de retenue 15 par un simple mouvement de translation axiale lors du posage de la prothèse dentaire 3 sur l'arcade dentaire du patient. La prothèse dentaire 3 peut ainsi venir de façon satisfaisante en appui sur toute la longueur de l'arcade dentaire du patient.

Une fois le posage réalisé et les vérifications effectuées, le dentiste entraîne en rotation les verrous 5 par l'intermédiaire d'un outil d'entraînement en rotation qu'il insère dans les canaux d'accès 18 selon les directions axiales IV-IV et V-V. L'outil d'entraînement en rotation est conformé de façon à permettre l'entraînement en rotation du verrou 5 avec un effet de rotule tel que décrit par exemple dans le document EP 2 607 722 A1.

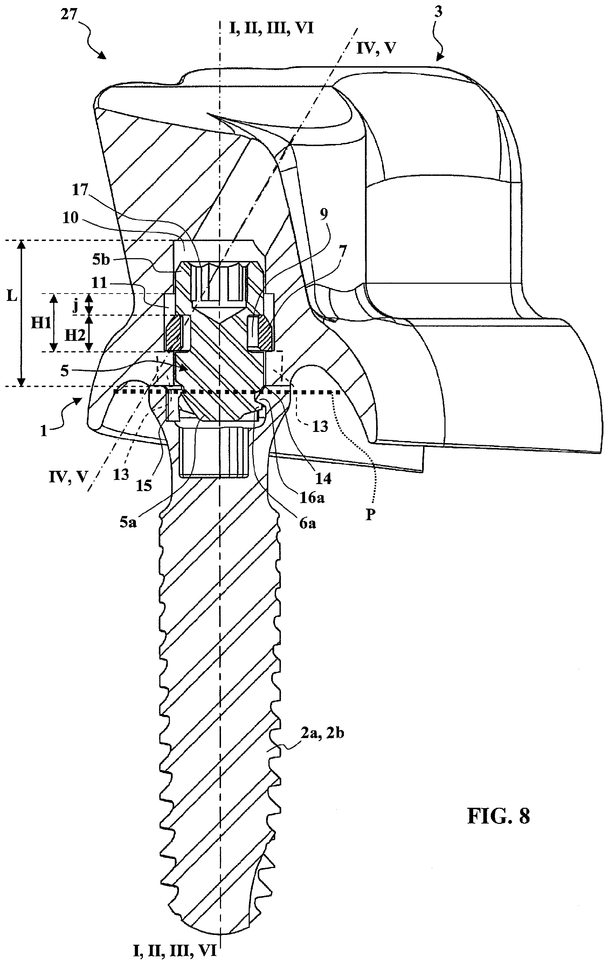

Lors de l'entraînement en rotation des verrous 5, les ailettes radiales 6a à 6c viennent selon leurs facettes d'appui 19 en appui contre les facettes de retenue 21 des excroissances saillantes 16a à 16c, et les rampes progressives 20 des facettes d'appui 19 achèvent de plaquer la prothèse dentaire 3 sur les implants dentaires 2a et 2b. On se retrouve alors dans la position illustrée sur la figure 8.

Il est toutefois possible que, lors du posage de la prothèse dentaire 3 sur l'arcade dentaire du patient, les ailettes radiales 6a à 6c se trouvent au moins partiellement en correspondance des excroissances saillantes 16a à 16c. Pour éviter dans ce cas que les verrous 5 empêchent un bon plaquage de la prothèse dentaire 3 sur l'arcade dentaire du patient, on prévoit que la gorge périphérique intérieure 11 présente une hauteur H1 légèrement supérieure à la hauteur H2 de la bague de retenue 7. Cette différence entre les hauteurs H1 et H2 induit un jeu axial j en translation entre la prothèse dentaire 3 et les verrous 5. En pratique, le jeu axial j et la longueur L du logement de réception 10 sont dimensionnés de façon à permettre un déplacement du verrou 5 dans la prothèse dentaire 3 afin que celui-ci n'empêche pas un posage satisfaisant de la prothèse dentaire 3 sur l'arcade dentaire du patient. Le jeu j et la longueur L sont également dimensionnés de façon à ce que l'outil d'entraînement en rotation puisse toujours entraîner efficacement le verrou 5 en rotation selon la direction axiale III-III en étant inséré dans le canal d'accès 18 orienté selon la direction axiale IV-IV, malgré le recul du verrou 5.

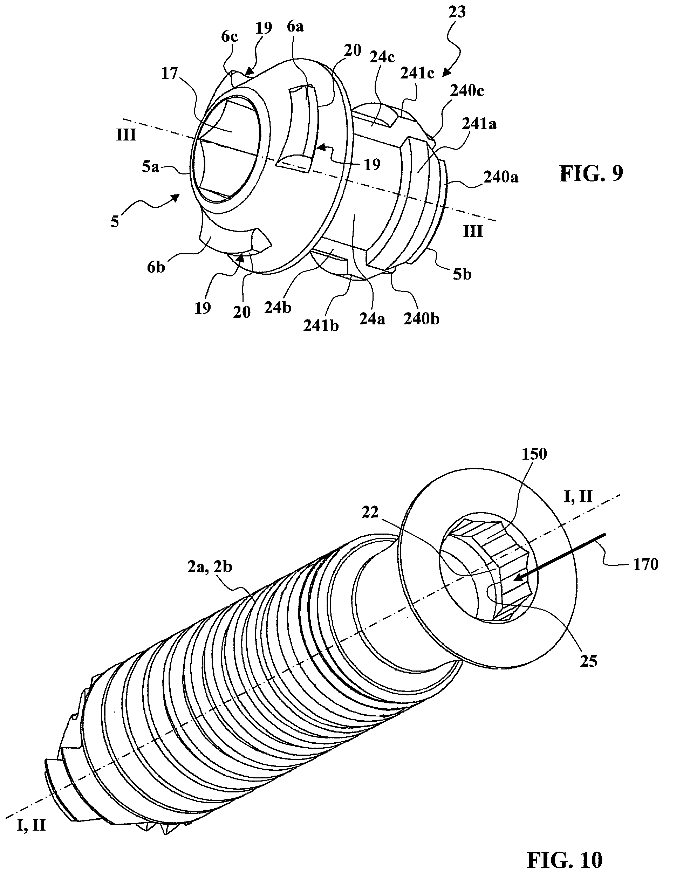

Les figures 9 à 15 illustrent un ensemble prothétique dentaire 27 selon un deuxième mode de réalisation selon l'invention.

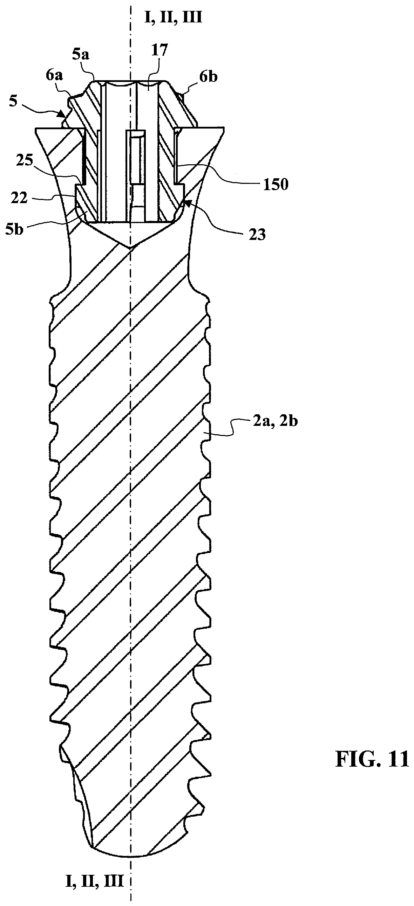

Dans ce deuxième mode de réalisation, le verrou 5 est monté rotatif et captif sur l'implant dentaire 2a ou 2b. Pour ce faire, l'implant dentaire 2a ou 2b comporte une gorge périphérique intérieure 22 à section transversale circulaire, située en partie intérieure de la cavité de réception 150 ménagée dans l'implant dentaire 2a ou 2b. Plus particulièrement visible sur les figures 9 et 11, le verrou 5 comporte quant à lui, à sa deuxième extrémité 5b, des moyens d'encliquetage 23 destinés à pénétrer dans la gorge périphérique intérieure 22 de la cavité de réception 150. En l'espèce, les moyens d'encliquetage 23 comportent trois ailettes 24a à 24c à extrémités libres 240a à 240c à déplacement radial élastique. Les extrémités libres 240a à 240c sont également munies de nervures 241a à 241c destinées à venir s'encliqueter dans la gorge périphérique intérieure 22 et y être retenues par un épaulement 25 situé au-dessus de la gorge périphérique intérieure 22.

L'empreinte 17 polygonale, permettant d'entraîner en rotation le verrou 5, traverse longitudinalement le verrou 5 sur sa longueur selon sa direction axiale III-III et débouche ainsi à la première extrémité 5a du verrou 5.

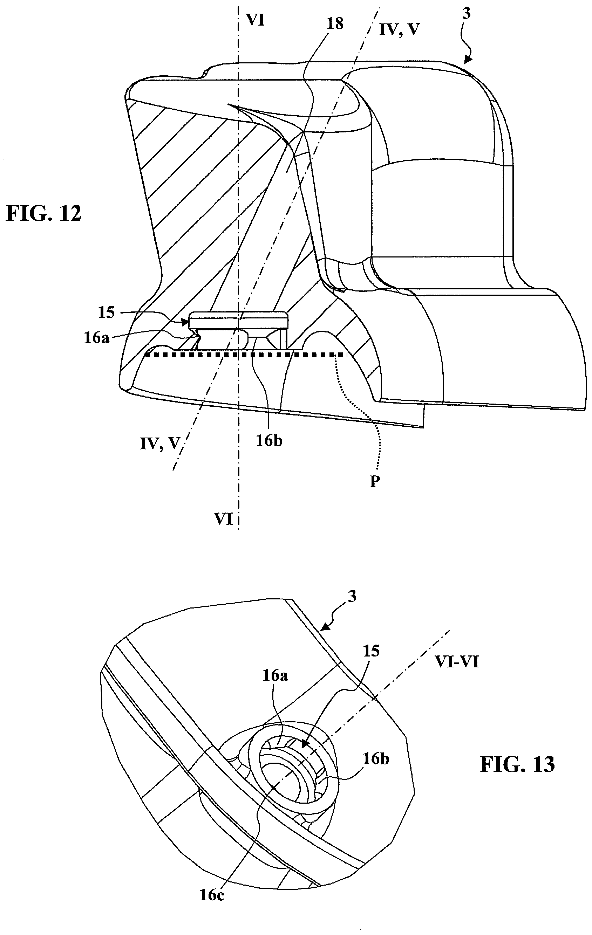

De son côté, la prothèse dentaire 3 est munie de la cavité de retenue 15, comme illustré sur les figures 12 à 14.

Les ailettes radiales 6a à 6c et les excroissances saillantes 16a à 16c sont conformées de façon similaire à ce qui a été expliqué en lien avec le premier mode de réalisation de l'invention illustré sur les figures 1 à 8.

Le dispositif de liaison 1 utilisé dans le deuxième mode de réalisation de l'invention est similaire à ce qui a été expliqué en lien avec le premier mode de réalisation de l'invention, si ce n'est que c'est ici la cavité de retenue 15 qui est ménagée dans la prothèse dentaire 3 de façon à être orientée en bouche du patient selon une direction axiale VI-VI coaxiale avec les directions axiales I-I ou II-II des implants dentaires 2a et 2b. Le verrou 5 est quant à lui disposé avec sa direction longitudinale III-III coïncidant avec la direction axiale I-I ou II-II des implants dentaires 2a et 2b.

Lors de la fixation de la prothèse dentaire 3 sur les implants dentaires 2a et 2b, le dentiste rapporte des verrous 5 en partie supérieure des implants 2a et 2b par encliquetage. Le dentiste pose alors la prothèse dentaire 3 sur l'arcade dentaire du patient. Ce posage se fait de façon parfaite si les ailettes radiales 6a à 6c ne sont pas en correspondance des excroissances saillantes 16a à 16c. Si tel n'est pas le cas, le dentiste entraîne légèrement en rotation les verrous 5 à l'aide d'un outil d'entraînement en rotation inséré dans les canaux d'accès 18 afin de disposer les ailettes radiales 6a à 6c en correspondance des secteurs angulaires 160a à 160c.

Si le posage s'avère satisfaisant, le dentiste entraîne alors les verrous 5 en rotation selon leur direction longitudinale III-III de façon à faire coopérer les facettes d'appui 19 des ailettes radiales 6a à 6c avec les facettes de retenue 21 des excroissances saillantes 16a à 16c. Pour ce faire, le dentiste introduit un outil d'entraînement en rotation dans l'empreinte 17 en passant dans le canal d'accès 18 et à travers la cavité de retenue 15.

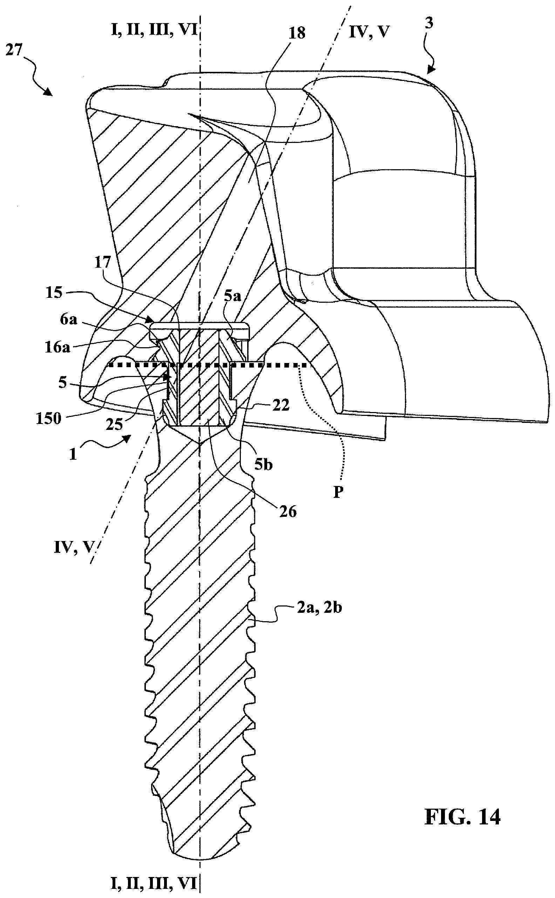

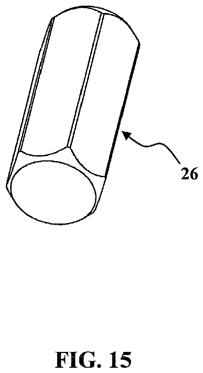

Afin de garantir que les verrous 5 restent bien à demeure sur les implants dentaires 2a et 2b, le dentiste insère dans l'empreinte 17 la pièce de verrouillage 26 illustrée sur la figure 15, qui présente une forme extérieure complémentaire à la forme intérieure de l'empreinte 17. La pièce de verrouillage 26 présente des dimensions permettant une insertion légèrement en force dans l'empreinte 17 du verrou 5. Une fois en place, comme illustré sur la figure 14, la pièce de verrouillage 26 empêche toute flexion radiale centripète des ailettes élastiques 24a à 24c, de sorte que les nervures 241a à 241c restent bien en position dans la gorge périphérique intérieure 22 située dans la cavité de réception 150 ménagée dans l'implant dentaire 2a et 2b.

On se trouve alors dans la position illustrée sur la figure 14.

Bien que la description précédente ait été effectuée en lien avec une prothèse plurale implanto-portée de type trans-fixée, c'est-à-dire fixée à plusieurs implants dans la mâchoire du patient, l'invention est également utilisable pour une prothèse unitaire implanto-portée de type trans-fixée, c'est-à-dire fixée à un seul implant dans la mâchoire du patient.

Le dispositif de liaison selon l'invention présente néanmoins des avantages supplémentaires importants dans le cas d'un ensemble prothétique dentaire 27 comprenant une prothèse dentaire 3 trans-fixée plurale implanto-portée sur une pluralité d'implants dentaires 2a et 2b, notamment lors de la phase de posage de la prothèse dentaire 3 sur l'arcade dentaire du patient.

La prothèse dentaire 3 trans-fixée plurale implanto-portée peut inclure une barre de liaison destinée à relier mécaniquement entre eux les implants dentaires sur lesquels vient se fixer la prothèse dentaire 3. Dans les modes de réalisation illustrés sur les figures, la prothèse dentaire 3 est dépourvue de barre de liaison.

La présente invention n'est pas limitée aux modes de réalisation qui ont été explicitement décrits, mais elle en inclut les diverses variantes et généralisations contenues dans le domaine des revendications ci-après.

## Revendications

1. Ensemble prothétique dentaire (27) comprenant :
- un implant dentaire (2a, 2b),
- une prothèse dentaire (3),
- un dispositif de liaison (1) comportant une cavité de retenue (15) ménagée dans l'un de l'implant dentaire (2a, 2b) ou de la prothèse dentaire (3), et munie sur sa périphérie d'excroissances saillantes (16a-16c) s'étendant radialement vers le centre de la cavité de retenue (15),
**caractérisé en ce que** :
- la prothèse dentaire (3) est de type trans-fixée,
- le dispositif de liaison (1) comprend un verrou (5) comportant au moins deux ailettes radiales (6a-6c), monté rotatif et retenu en translation dans l'autre de l'implant dentaire (2a, 2b) ou de la prothèse dentaire (3), les ailettes radiales (6a-6c) et les excroissances saillantes (16a-16c) étant conformées et dimensionnées de façon à permettre une pénétration du verrou (5) et de ses ailettes radiales (6a-6c) dans la cavité de retenue (15) par un simple mouvement de translation axiale (170),
- les ailettes radiales (6a-6c) et les excroissances saillantes (16a-16c) sont conformées et dimensionnées de façon à coopérer par rotation du verrou (5) pour retenir la prothèse dentaire (3) trans-fixée sur l'implant dentaire (2a, 2b).

2. Ensemble prothétique dentaire (27) selon la revendication 1, **caractérisé en ce que** :
- les ailettes radiales (6a-6c) du verrou (5) sont séparées entre elles par des secteurs angulaires (60a-60c) dimensionnés de façon à laisser passer une excroissance saillante (16a-16c) par un simple mouvement de translation axiale (170),
- les excroissances saillantes (16a-16c) de la cavité de retenue (15) sont séparées entre elles par des secteurs angulaires (160a-160c) dimensionnés de façon à laisser passer une ailette radiale (6a-6c) lors dudit simple mouvement de translation axiale (170).

3. Ensemble prothétique dentaire (27) selon l'une des revendications 1 ou 2, **caractérisé en ce que** les ailettes radiales (6a-6c) du verrou (5) sont portées par un premier tronçon d'extrémité (5a) sensiblement conique ou tronconique.

4. Ensemble prothétique dentaire (27) selon l'une quelconque des revendications 1 à 3, **caractérisé en ce que** le verrou (5) comporte une empreinte (17) permettant son entraînement en rotation à l'aide d'un outil.

5. Ensemble prothétique dentaire (27) selon l'une quelconque des revendications 1 à 4, **caractérisé en ce que** les ailettes radiales (6a-6c) comportent une facette d'appui (19) à rampe progressive (20) destinée à venir porter contre une excroissance saillante (16a-16c) de la cavité de retenue (15) et/ou **en ce que** les excroissances saillantes (16a-16c) comportent une facette de retenue (21) à rampe progressive destinée à venir porter contre une ailette radiale (6a-6c) du verrou (5).

6. Ensemble prothétique dentaire (27) selon l'une quelconque des revendications 1 à 5, **caractérisé en ce que** le verrou (5) est monté rotatif et retenu en translation dans la prothèse dentaire (3) par l'intermédiaire d'une bague de retenue (7) compressible, de préférence au moyen d'une fente (8), venant simultanément en prise dans une gorge périphérique extérieure (9) ménagée sur le verrou (5) et dans une gorge périphérique intérieure (11) ménagée dans la prothèse dentaire (3).

7. Ensemble prothétique dentaire (27) selon la revendication 6, **caractérisé en ce que** la prothèse dentaire (3) comporte une pluralité de canaux axiaux (13) débouchants s'étendant jusqu'à la gorge périphérique intérieure (11) ménagée dans la prothèse dentaire (3).

8. Ensemble prothétique dentaire (27) selon l'une des revendications 6 ou 7, **caractérisé en ce que** la gorge périphérique intérieure (11) ménagée dans la prothèse dentaire (3), et/ou **en ce que** la gorge périphérique extérieure (9) ménagée sur le verrou (5), présentent une hauteur (H1) légèrement supérieure à celle (H2) de la bague de retenue (7), permettant un jeu axial (j) en translation entre la prothèse dentaire (3) et le verrou (5).

9. Ensemble prothétique dentaire (27) selon l'une quelconque des revendications 1 à 5, **caractérisé en ce que** le verrou (5) est monté rotatif et retenu en translation dans l'implant dentaire (2a, 2b) par l'intermédiaire :
- d'une gorge périphérique intérieure (22) située dans une cavité de réception (150) ménagée dans l'implant dentaire (2a, 2b),
- d'une deuxième extrémité (5b) de verrou (5) comportant des moyens d'encliquetage (23) destinés à pénétrer dans la gorge périphérique intérieure (22) de la cavité de réception (150).

10. Ensemble prothétique dentaire (27) selon l'une quelconque des revendications 1 à 9, **caractérisé en ce que** :
- il comprend une pluralité d'implants dentaires (2a, 2b),
- la prothèse dentaire (3) trans-fixée est une prothèse plurale implanto-portée.

11. Ensemble prothétique dentaire (27) selon l'une quelconque des revendications 1 à 10, **caractérisé en ce que** la prothèse dentaire (3) comprend au moins un canal d'accès (18) orienté selon une direction (IV-IV, V-V) oblique avec la surface générale d'appui (P) sensiblement plane de la prothèse dentaire (3).

## Patentansprüche

1. Zahnprothesenaufbau (27), umfassend:
- ein Zahnimplantat (2a, 2b),
- eine Zahnprothese (3),
- eine Anschlussvorrichtung (1) umfassend eine Rückhaltekavität (15), die entweder im Zahnimplantat (2a, 2b) oder in der Zahnprothese (3) ausgebildet ist, und die auf ihrer Außenseite mit vorspringenden Höckern (16a-16c) ausgestattet ist, die sich radial entgegen einem Zentrum der Rückhaltekavität (15) erstrecken,
**dadurch gekennzeichnet, dass**:
- wobei die Zahnprothese (3) nach transfixierter Art aufgebaut ist,
- die Anschlussvorrichtung (1) einen Riegel (5) umfasst, der wenigstens zwei radiale Flügel (6a-6c) aufweist und drehbar sowie translatorisch zurückgehalten am entsprechend anderen Teil, dem Zahnimplantat (2a, 2b) oder der Zahnprothese (3) befestigt ist, wobei die radialen Flügel (6a-6c) und die vorspringenden Höcker (16a-16c) eingerichtet und aufgebaut sind, dem Riegel (5) und seinen radialen Flügeln (6a-6c) durch eine Bewegung axialer Translation (170) in die Rückhaltekavität (15) einzudringen,
- die radialen Flügel (6a-6c) und die vorspringenden Höcker (16a-16c) eingerichtet und aufgebaut sind, durch eine Drehung des Riegels (5) zusammenzuwirken, um die Zahnprothese (3) aufgesteckt auf dem Zahnimplantat (2a, 2b) zu halten.

2. Zahnprothesenaufbau (27) nach Anspruch 1, **dadurch gekennzeichnet, dass**:
- die radialen Flügel (6a-6c) des Riegels (5) voneinander über winklige Sektoren (60a-60c) getrennt sind, die derart aufgebaut sind, dass einem vorspringenden Höcker (16a-16c) ermöglicht wird, durch eine einfache Bewegung axialer Translation (170) hindurchzudringen,
- die vorspringenden Höcker (16a-16c) der Rückhaltekavität (15) voneinander über winklige Sektoren (160a-160c) getrennt sind, die derart aufgebaut sind, dass einem radialen Flügel (6a-6c) ermöglicht wird, während der genannten einfachen Bewegung axialer Translation (170) hindurchzudringen.

3. Zahnprothesenaufbau (27) nach irgendeinem der Ansprüche 1 oder 2, **dadurch gekennzeichnet, dass** die radialen Flügel (6a-6c) des Riegels (5) an einem Bereich eines ersten Endes (5a) getragen sind, der im Wesentlichen kegelförmig oder kegelstumpfförmig ist.

4. Zahnprothesenaufbau (27) nach irgendeinem der vorstehenden Ansprüche 1 bis 3, **dadurch gekennzeichnet, dass** der Riegel (5) einen Sockel (17) besitzt, der es ihm ermöglicht mithilfe eines Werkzeuges gedreht angetrieben zu werden.

5. Zahnprothesenaufbau (27) nach irgendeinem der vorstehenden Ansprüche 1 bis 4, **dadurch gekennzeichnet, dass** die radialen Flügel (6a-6c) eine Lagerfacette (19) mit einer progressiven Rampe (20) zum Lagern gegen einen vorspringenden Höcker (16a-16c) der Rückhaltekavität (15) besitzen und/oder dass die vorspringenden Höcker (16a-16c) eine Rückhaltefacette (21) mit einer progressiven Rampe zum Lagern gegen einen radialen Flügel (6a-6c) des Riegels (5) besitzen.

6. Zahnprothesenaufbau (27) nach irgendeinem der vorstehenden Ansprüche 1 bis 5, **dadurch gekennzeichnet, dass** der Riegel (5) drehbar und translatorisch zurückgehalten in der Zahnprothese (3) über einen kompressiblen Rückhaltering (7), vorzugsweise mittels eines Schlitzes (8), gehalten ist, der gleichzeitig in eine äußere Außenspalte (9), die auf dem Riegel (5) ausgebildet ist und in eine innere Außenspalte (11), die auf der Zahnprothese (3) ausgebildet ist, eingreift.

7. Zahnprothesenaufbau (27) nach Anspruch 6, **dadurch gekennzeichnet, dass** die Zahnprothese (3) eine Vielzahl von axialen Öffnungskanälen (13) besitzt, die sich bis zur inneren Außenspalte (11) erstrecken, die in der inneren Zahnprothese (3) ausgebildet ist.

8. Zahnprothesenaufbau (27) nach Anspruch 6 oder 7, **dadurch gekennzeichnet, dass** die inner Außenspalte (11), die in der Zahnprothese (3) ausgebildet ist, und/oder die äußere Außenspalte (9), die auf dem Riegel (5) ausgebildet ist, eine Höhe (H1) besitzen, die leicht größer ist, als die (H2) des Rückhalteringes (7), was ein Axialspiel (j) in der Bewegung zwischen der Zahnprothese (3) und dem Riegel (5) ermöglicht.

9. Zahnprothesenaufbau (27) nach irgendeinem der vorstehenden Ansprüche 1 bis 5, **dadurch gekennzeichnet, dass** der Riegel (5) drehbar und in translatorisch zurückgehalten im Zahnimplantat (2a, 2b) gehalten ist, durch:
- eine innere Außenspalte (22), die sich in einer Aufnahmeausnehmung (150) befindet, die im Zahnimplantat (2a, 2b) ausgebildet ist,
- ein zweites Ende (5b) des Riegels (5) Schnappverbindungsmittel (23) zum Eindringen in die innere Außenspalte (22) der Aufnahmeausnehmung (150) besitzt.

10. Zahnprothesenaufbau (27) nach irgendeinem der vorstehenden Ansprüche 1 bis 9, **dadurch gekennzeichnet, dass**
- er eine Vielzahl von Zahnimplantaten (2a, 2b) aufweist,
- die transfixierte Zahnprothese (3) eine implantatgestützte multiple Prothese ist.

11. Zahnprothesenaufbau (27) nach irgendeinem der vorstehenden Ansprüche 1 bis 10, **dadurch gekennzeichnet, dass** die Zahnprothese (3) wenigstens einen Zugangskanal (18) umfasst, der in einer Richtung (IV-IV, V-V) ausgerichtet ist, die zur im Wesentlichen ebenen Allgemeinlageroberfläche (P) der Zahnprothese (3) schräg steht.

## Claims

1. Dental prosthetic assembly (27) comprising:
- a dental implant (2a, 2b),
- a dental prosthesis (3),
- a connecting device (1) comprising a retention cavity (15), which is formed in one of dental implant (2a, 2b) or dental prosthesis (3) and which is provided on its periphery with protuberances (16a-16c) extending radially towards the centre of the retention cavity (15),
**characterised in that**:
- the dental prosthesis (3) is of the transfixed type,
- the connecting device (1) comprises a lock (5) which has at least two radial wings (6a-6c) and is mounted rotatably and retained in translation in the other of dental implant (2a, 2b) or dental prosthesis (3), the radial wings (6a-6c) and the protuberances (16a-16c) being configured and dimensioned in such a way as to allow the lock (5) and its radial wings (6a-6c) to penetrate into the retention cavity (15) by a simple movement of axial translation (170),
- the radial wings (6a-6c) and the protuberances (16a-16c) are configured and dimensioned in such a way as to cooperate by rotation of the lock (5) in order to keep the dental prosthesis (3) transfixed on the dental implant (2a, 2b).

2. Dental prosthetic assembly (27) according to claim 1, **characterised in that**:
- the radial wings (6a-6c) of the lock (5) are separated from each other by angular sectors (60a-60c) which are dimensioned in such a way as to allow a protuberance (16a-16c) to pass through by a simple movement of axial translation (170),
- the protuberances (16a-16c) of the retention cavity (15) are separated from each other by angular sectors (160a-160c) which are dimensioned in such a way as to allow a radial wing (6a-6c) to pass through during said simple movement of axial translation (170).

3. Dental prosthetic assembly (27) according to either of claims 1 and 2, **characterised in that** the radial wings (6a-6c) of the lock (5) are carried by a first end portion (5a), which is substantially conical or frustoconical.

4. Dental prosthetic assembly (27) according to any one of claims 1 to 3, **characterised in that** the lock (5) has a socket (17) allowing it to be driven in rotation with the aid of a tool.

5. Dental prosthetic assembly (27) according to any one of claims 1 to 4, **characterised in that** the radial wings (6a-6c) have a bearing facet (19) with a progressive incline (20) intended to bear against a protuberance (16a-16c) of the retention cavity (15), and/or **in that** the protuberances (16a-16c) have a retention facet (21) with a progressive incline intended to bear against a radial wing (6a-6c) of the lock (5).

6. Dental prosthetic assembly (27) according to any one of claims 1 to 5, **characterised in that** the lock (5) is mounted rotatably and retained in translation in the dental prosthesis (3) by way of a compressible retention ring (7), preferably by means of a slit (8), engaging simultaneously in an outer peripheral groove (9) formed on the lock (5) and in an inner peripheral groove (11) formed in the dental prosthesis (3).

7. Dental prosthetic assembly (27) according to claim 6, **characterised in that** the dental prosthesis (3) has a plurality of open axial channels (13) extending as far as the inner peripheral groove (11) formed in the dental prosthesis (3).

8. Dental prosthetic assembly (27) according to either of claims 6 and 7, **characterised in that** the inner peripheral groove (11), formed in the dental prosthesis (3), and/or the outer peripheral groove (9), formed on the lock (5), have a height (H1) which is slightly greater than that (H2) of the retention ring (7), permitting axial play (j) in translation between the dental prosthesis (3) and the lock (5).

9. Dental prosthetic assembly (27) according to any one of claims 1 to 5, **characterised in that** the lock (5) is mounted rotatably and retained in translation in the dental implant (2a, 2b) by way of:
- an inner peripheral groove (22) situated in a receiving cavity (150) formed in the dental implant (2a, 2b),
- a second end (5b) of the lock (5) having snap-fit means (23) intended to penetrate into the inner peripheral groove (22) of the receiving cavity (150).

10. Dental prosthetic assembly (27) according to any one of claims 1 to 9, **characterised in that**:
- it comprises a plurality of dental implants (2a, 2b),
- the transfixed dental prosthesis (3) is an implant-supported multiple prosthesis.

11. Dental prosthetic assembly (27) according to any one of claims 1 to 10, **characterised in that** the dental prosthesis (3) comprises at least one access channel (18) oriented in a direction (IV-IV, V-V) oblique with respect to the substantially plane general bearing surface (P) of the dental prosthesis (3).
